# EUROPÄISCHE PATENTSCHRIFT

(11) **EP 3 459 900 B1**
(45) Veröffentlichungstag und Bekanntmachung des Hinweises auf die Patenterteilung: **26.06.2024**
(21) Anmeldenummer: 18196441.2
(22) Anmeldetag: 25.09.2018
(51) Int. Cl.: B66C 23/80

(54) **FAHRZEUGSTÜTZE MIT KLAPPTEIL**
VEHICLE SUPPORT WITH FOLDING PART
SUPPORT DE VÉHICULE AVEC PARTIE RABATTABLE

(30) Priorität: 26.09.2017 DE 102017122343
(43) Veröffentlichungstag der Anmeldung: 27.03.2019
(73) Patentinhaber: Schwing GmbH, 44653 Herne (DE)
(72) Erfinder: Sacken, Christoph, 45128 Essen (DE); Segschneider, Bernd, 44227 Dortmund (DE)
(74) Vertreter: Schneiders & Behrendt Bochum

(56) Entgegenhaltungen:
- EP-A2- 0 103 434
- WO-A1-2013/082968
- DE-A1- 19 736 109
- DE-A1-102013 206 366
- DE-A1-102016 104 653
- JP-A- S5 613 243
- KR-A- 20150 142 698

## Beschreibung

Die Erfindung betrifft ein Fahrzeug, insbesondere eine Autobetonpumpe, mit einem auf einem Rahmen angeordneten, schwenkbaren Drehschemel mit darauf aufgebautem Mast, und einer Rahmenabstützung, die in das Fahrzeugprofil einziehbare und / oder aus dem Fahrzeugprofil ausziehbare Träger aufweist, wobei die Träger jeweils an einem fahrzeugfesten Ausschubabschnitt geführt sind und mit diesem ein Teleskop bilden, wobei die fahrzeugfesten Ausschubabschnitte in Fahrtrichtung hinter einem Fahrerhaus angeordnet sind, wobei an einem freien Ende der Träger jeweils ein über ein Gelenk verbundenes Klappteil angeordnet ist, wobei an dem Klappteil jeweils ein Stützbein angeordnet ist, wobei das Gelenk in eingezogener Transportstellung der Träger außerhalb des jeweiligen Ausschubabschnittes angeordnet ist, sodass das Klappteil in einer Transportklappstellung seitlich in das Fahrzeugprofil klappbar ist.

Ein solches Fahrzeug ist aus der EP 1 003 655 B1 bekannt. Solche Fahrzeuge werden als Straßenfahrzeuge für verschiedene Zwecke vorgesehen. Die Erfindung bezieht sich insbesondere auf Fahrzeuge mit aufgebauter Betonpumpe, wobei der Mast als Verteilermast dient, welcher eine Betonförderleitung trägt, um den von der Betonpumpe geförderten Beton zu verteilen. In der Regel müssen leistungsfähige Fahrzeuge der hier in Rede stehenden Art mit weit ausladenden Masten versehen werden. Bei fahrbaren Autobetonpumpen erfordern die notwendigen Reichweiten des Mastes dessen Unterteilung in Mastsegmente mit Knickgelenken, welche ein Zusammenklappen des Mastes für den Fahrbetrieb ermöglichen. Solche Masten erreichen beträchtliche Höhen und lösen ein von der Ausladung und der Länge des Mastes abhängiges Kippmoment aus. Die Rahmenabstützung trägt das Kippmoment auf der Standfläche des Fahrzeuges ab und verhindert dadurch ein Umschlagen des Fahrzeuges mit dem Mast. Die Entwicklung derartiger Fahrzeuge unterliegt dem Zwang, wegen der wachsenden Anforderungen ständig steigende Mastlängen und Reichweiten vorzusehen, jedoch das Fahrzeugprofil für den Fahrbetrieb einzuhalten. Bei fahrbaren Autobetonpumpen kommt es in insoweit darauf an, die zulässige Fahrzeugbreite nicht zu überschreiten, um Einschränkungen für Sondertransporte zu vermeiden, die bei Überbreiten eines Fahrzeuges gefordert werden. Die Rahmenabstützung erfolgt in der Regel auf vier Abstützpunkten, insbesondere wenn der Drehschemel des Mastes einen unbegrenzten Schwenkwinkel zulässt. Für die Abstützung ergibt sich dann oftmals das Problem, dass für Kippmomente im Wesentlichen um die Querachse des Fahrzeuges geringere Probleme als bei der Abstützung von Kippmomenten um die Fahrzeuglängsachse entstehen. Da aber in den meisten Fällen die Schwenkbarkeit des Mastes im Drehschemel nicht auf Kippmomente um die Querachse beschränkt werden kann, sind bei entsprechenden Mastlängen für die Abstützung lange Träger erforderlich, was mit der Schwierigkeit verbunden ist, diese Träger für den Fahrbetrieb im Fahrzeugprofil unterzubringen. Die Ausschubabschnitte und die in diesen teleskopartig angeordneten Träger müssen in der Transportstellung innerhalb der beiden seitlichen Begrenzungen des Fahrzeugprofiles für den Fahrbetrieb bleiben. Hierdurch ist die Länge der Ausschubabschnitte und der Träger begrenzt.

Weitere Fahrzeuge mit einem auf einem Rahmen angeordneten, schwenkbaren Drehschemel mit darauf aufgebautem Mast und einer Rahmenabstützung, die Träger aufweist, wobei an den Trägern jeweils ein Stützbein angeordnet ist, sind beispielsweise aus EP 0 103 434 A2, DE 10 2013 206366 A1, DE 197 36 109 A1 und JP S56 13243 A bekannt. Das Dokument EP 0 103 434 A2 offenbart den Oberbegriff von Anspruch 1.

Die Erfindung geht von einem vorbekannten Fahrzeug aus, auf dessen Fahrgestell eine Betonpumpe und ein Verteilermast aufgebaut ist, dessen Drehschemel, wie bei derartigen Fahrzeugen üblich, in unmittelbarer Nähe des Fahrerhauses auf dem Fahrgestell bzw. einem Hilfsrahmen des Fahrgestells aufgebaut ist, während der Fülltrichter der Betonpumpe am Fahrzeugheck liegt und Teile der Betonfördereinrichtung in der Fahrzeugmitte angeordnet sind. Bei diesem Fahrzeug sind für die Vierpunktrahmenabstützung vier Träger vorgesehen. Die vordere Rahmenabstützung weist fahrzeugfeste Ausschubabschnitte auf, in denen die Träger so angeordnet sind, dass sie ein Teleskop bilden, durch welches die Träger in das Fahrzeugprofil einziehbar oder aus dem Fahrzeugprofil ausziehbar sind. An den freien Enden der Träger sind über ein Gelenk verbundene Klappteile angeordnet, wobei an den Klappteilen jeweils ein Stützbein angeordnet ist. Um das Klappteil mit dem daran angeordneten Stützbein für den Fahrbetrieb innerhalb der beiden seitlichen Begrenzungen des Fahrzeugprofiles anzuordnen, lässt sich das Klappteil in eingezogener Transportstellung der Träger nach hinten in eine Transportklappstellung seitlich in das Fahrzeugprofil klappen. Dies verkürzt zum einen die mögliche Länge der Ausschubabschnitte und damit auch der Träger. Zum anderen begrenzt das seitliche nach hinten Klappen die mögliche Länge rückwärtiger Träger. In der Regel sind zwei rückwärtige Träger über ein Gelenk seitlich aus dem Fahrzeugprofil ausklappbar. Die Anordnung dieses Gelenkes muss beim vorbekannten Fahrzeug nach hinten verschoben werden, damit ausreichend Platz für das in Transportklappstellung angeklappte Klappteil und das daran angeordnete Stützbein vorhanden ist. Hierdurch würde die maximal mögliche Länge der rückwärtigen Träger u.U. eingeschränkt und der verfügbare Einbauraum für die Steuerungselemente der Maschinenhydraulik und -elektronik stark eingeschränkt. Das vorbekannte Fahrzeug eignet sich deshalb nicht für Masten mit großen Längen und Ausladungen sowie für unbegrenzt drehbare Drehschemel. Außerdem sind für die Klappbewegung in Transportklappstellung nach hinten aufgrund des großen Schwenkbereiches des Klappteiles am Träger aufwändige Antriebe erforderlich.

Es ist daher Aufgabe der Erfindung, ein Fahrzeug der oben genannten Art bereitzustellen, das den gewachsenen Anforderungen an die Reichweite von Masten gerecht wird, ohne dass damit Beeinträchtigungen in anderer Hinsicht einhergehen. Insbesondere soll die Abstützweite der Rahmenabstützung vergrößert werden.

Gelöst wird diese Aufgabe durch ein Fahrzeug mit den Merkmalen des Anspruchs 1.

Dadurch, dass das Klappteil in Transportklappstellung nach vorne in Richtung Fahrerhaus klappbar ist, kann die Abstützweite der Rahmenabstützung erhöht werden, ohne dass der (vorzugsweise bogenförmige) Träger in Transportstellung für den Fahrbetrieb oder das daran angelenkte Klappteil in Transportklappstellung für den Fahrbetrieb seitlich über das Fahrzeugprofil hinausragen. Die Klappbewegung des Klappteils in Transportklappstellung nach vorne in Richtung Fahrerhaus lässt einerseits ausreichend Einbauraum für die Steuerungselemente der Maschinenhydraulik und -elektronik und ermöglicht die Anlenkung von ausreichend langen rückwärtigen Klappträgern andererseits so dass auch hierdurch eine hohe Abstützweite der Rahmabstützung erreicht werden kann.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Gemäß einer vorteilhaften Ausgestaltung der Erfindung ist vorgesehen, dass das Fahrzeug zwischen Fahrerhaus und Ausschubabschnitt zwei oder mehr vordere, dicht beieinander stehende Radachsen, aufweist, wobei die an dem jeweiligen Klappteil angeordneten Stützbeine in Transportklappstellung zwischen zwei Radachsen innerhalb des Fahrzeugprofils angeordnet sind. Die Anordnung der Stützbeine in Transportklappstellung zwischen den Radachsen hat den Vorteil, dass hier ausreichend Platz vorhanden ist, um die Stützbeine für den Fahrbetrieb im Fahrzeugprofil unterzubringen. An den Stützbeinen angeordnete Stützteller für den Bodenkontakt müssen daher auch nicht für den Fahrbetrieb demontiert werden. Mit der Anordnung der Stützbeine zwischen den Radachsen, z.B einer Doppellenkachse, muss das Fahrzeug auch nicht mehr aufwendig, z.B. durch Vergrößerung des Achsabstandes der Radachsen, umgebaut werden.

Besonders vorteilhaft ist die Ausführungsform, dass das Klappteil aus der Transportklappstellung in eine Abstützklappstellung verschwenkbar ist, bevor der Träger aus der eingezogenen Transportstellung in eine ausgezogene Abstützstellung ausziehbar ist. Durch das Verschwenken des Klappteils in die Abstützklappstellung kann dieses hervorragend aus dem Fahrzeugprofil heraus geklappt werden. Insbesondere wenn sich das Stützbein in Transportklappstellung zwischen den Radachsen der Doppellenkachse des Fahrzeugs befindet, ist es durch vorheriges Klappen des Klappteils aus der Transportklappstellung in die Abstützklappstellung möglich, das Stützbein zwischen den Rädern nahezu senkrecht zur Fahrzeuglängsachse hervor zu bewegen, bevor der Träger aus der Transportstellung im Ausschubabschnitt herausgezogen oder geschoben wird. Hierdurch ist eine besonders platzsparende Anordnung des Klappteils mit dem daran angeordneten Stützbein in Transportklappstellung zwischen zwei Radachsen innerhalb des Fahrzeugprofils möglich.

Eine besonders vorteilhafte Ausführung der Erfindung sieht vor, dass das Klappteil in der Transportklappstellung und / oder in der Abstützklappstellung verrastbar ist. Mit einer Verrastmöglichkeit des Klappteils kann sichergestellt werden, dass dieses die gewünschte Stellung gegenüber dem Träger einhält. In der Transportklappstellung kann hierdurch sichergestellt werden, dass das Klappteil nicht während der Fahrt aus dem Fahrzeugprofil heraus geklappt. In der Abstützklappstellung kann durch die Verrastung sichergestellt werden, dass die Rahmenabstützung das Fahrzeug sicher abstützt. Der Verrastmechanismus kann u.a. durch einen Bolzen oder eine Stange gebildet sein, der die Stellung des Klappteils gegenüber dem Träger sichert.

Von besonderem Vorteil ist gemäß der Erfindung, dass die Ausschubabschnitte jeweils einen Kragen aufweisen, wobei dieser gegenüber dem Fahrzeugprofil in Richtung des Fahrerhauses, insbesondere mit einem Winkel von bis zu 20 Grad, vorzugsweise 15 Grad, zur Fahrzeugmitte hin verläuft, sodass der Kragen auf einer dem Fahrerhaus zugewandten Seite mindestens um die Breite des Klappteiles, möglichst jedoch nicht um wesentlich mehr als diese Breite, vom Fahrzeugprofil in Richtung Fahrzeugmitte versetzt ist. Der Winkel des Kragens gegenüber der Fahrzeuglängsrichtung sollte möglichst klein sein und der Kragen sollte möglichst nah an die Außenprofilkante des Fahrzeugprofils geführt sein. Durch diese Maßnahme kann die als Hebelarm auf den Kragen wirksame Ausschublänge des Trägers möglichst klein gehalten werden, wodurch die auf den Kragen wirkenden Kräfte so gering wie möglich werden und der Kragen möglichst leicht dimensioniert werden kann. Zudem wird die Krafteinleitung zwischen Träger und Kragen beim Abstützen durch diese Maßnahme optimiert. Hierzu wird der Kragen auf der dem Fahrerhaus zugewandten Seite um höchstens die Breite des Klappteiles vom Fahrzeugprofil in Richtung Fahrzeugmitte versetzt, während der Kragen auf der von dem Fahrerhaus abgewandten Seite bis an die Außenprofilkante des Fahrzeugprofils geführt ist. Mit einem Winkel von maximal 20 Grad, vorzugsweise 15 Grad, gegenüber der Fahrzeuglängsrichtung kann der Kragen nah an die Außenprofilkante des Fahrzeugprofils herangeführt werden, wobei der so ausgebildete Ausschubabschnitt ausreichend Platz bietet, damit das Gelenk in eingezogener Transportstellung der Träger außerhalb des jeweiligen Ausschubabschnittes angeordnet ist, sodass das Klappteil in die Transportklappstellung seitlich nach vorne in das Fahrzeugprofil hinein klappbar ist.

Eine weitere vorteilhafte Ausführung sieht vor, dass das Klappteil gegenüber dem Träger jeweils mittels eines Antriebes von der Transportklappstellung in die Abstützklappstellung verschwenkbar ist. Ein solcher Antrieb erleichtert das Verschwenken das Klappteiles in die gewünschte Stellung und macht eine automatische Positionierung der Stützbeine möglich. Der Antrieb kann als Drehantrieb oder als linearer, vorzugsweise hydraulischer Antrieb ausgebildet sein, wobei dieser das Klappteil gegenüber dem Träger direkt oder über ein Hebelgetriebe antreiben kann,.

Besonders vorteilhaft ist eine Ausführungsform, bei der der Antrieb dazu ausgebildet ist, das Klappteil in der Transportklappstellung und / oder in der Abstützklappstellung zu halten. Mit einer solchen Ausbildung des Antriebes ist es möglich, in der Transportklappstellung sicherzustellen, dass das Klappteil nicht während der Fahrt aus dem Fahrzeugprofil herausgeklappt. In der Abstützklappstellung kann durch den Antrieb sichergestellt werden, dass die Rahmenabstützung das Fahrzeug sicher abstützt.

Eine besonders vorteilhafte Ausführungsform der Erfindung sieht vor, dass der Antrieb einen Hydraulikzylinder umfasst, wobei an dem freien Ende des Trägers eine Nase zur Anlenkung des Hydraulikzylinders ausgebildet ist. Diese Anlenkung ermöglicht einen ausreichend großen Hebelarm, um das Klappteil gegenüber dem Träger mit dem Hydraulikzylinder sicher von der Transportklappstellung in die Abstützklappstellung und wieder in die Transportklappstellung zu verschwenken.

Von besonderem Vorteil ist gemäß einer Ausgestaltung, dass die Nase in Transportstellung des Trägers um den jeweiligen Kragen des Ausschubabschnittes herum in Richtung der Fahrzeugmitte führt. Damit kann die Drehachse für den Hydraulikzylinder möglichst weit in der Fahrzeugmitte positioniert werden, um ausreichend Einbaulänge und Hebelarm für den Hydraulikzylinder auch in Transportklappstellung zur Verfügung zu stellen.

Gemäß einer besonders vorteilhaften Ausgestaltung der Erfindung ist vorgesehen, dass das Klappteil teleskopierbar aufgebaut ist. Dadurch, dass die Klappteile selbst teleskopierbar aufgebaut sind und somit zusammen mit den Ausschubabschnitten und den Trägern zwei über das Gelenk verbundene Teleskope bilden, lassen sich längere Masten realisieren, da die Rahmenabstützung weiter reicht, ohne dass die Träger im Fahrbetrieb über das zulässige Fahrzeugprofil hinausragen. Außerdem ist die Position der Stützbeine in Transportklappstellung zwischen den Radachsen einfach über das teleskopierbare Klappteil einstellbar, was die Konstruktion flexibler macht.

Weitere Merkmale, Einzelheiten und Vorteile der Erfindung ergeben sich aufgrund der nachfolgenden Beschreibung sowie anhand der Zeichnungen. Ein Ausführungsbeispiel der Erfindung ist in den folgenden Zeichnungen rein schematisch dargestellt und wird nachfolgend näher beschrieben. Einander entsprechende Gegenstände sind in allen Figuren mit den gleichen Bezugszeichen versehen. Es zeigen:
- Figur 1: erfindungsgemäßes Fahrzeug in Seitenansicht,
- Figur 2: erfindungsgemäßes Fahrzeug in Vogelperspektive,
- Figur 3: Träger mit Klappteil,
- Figur 4: Rahmenabstützung und Klappteil,
- Figur 5: Rahmenabstützung und Klappteil in Vogelperspektive,
- Figur 6: Rahmenabstützung und Klappteil,
- Figur 7: Träger mit Klappteil,
- Figur 8: Träger mit Klappteil,
- Figur 9: Träger mit Klappteil.

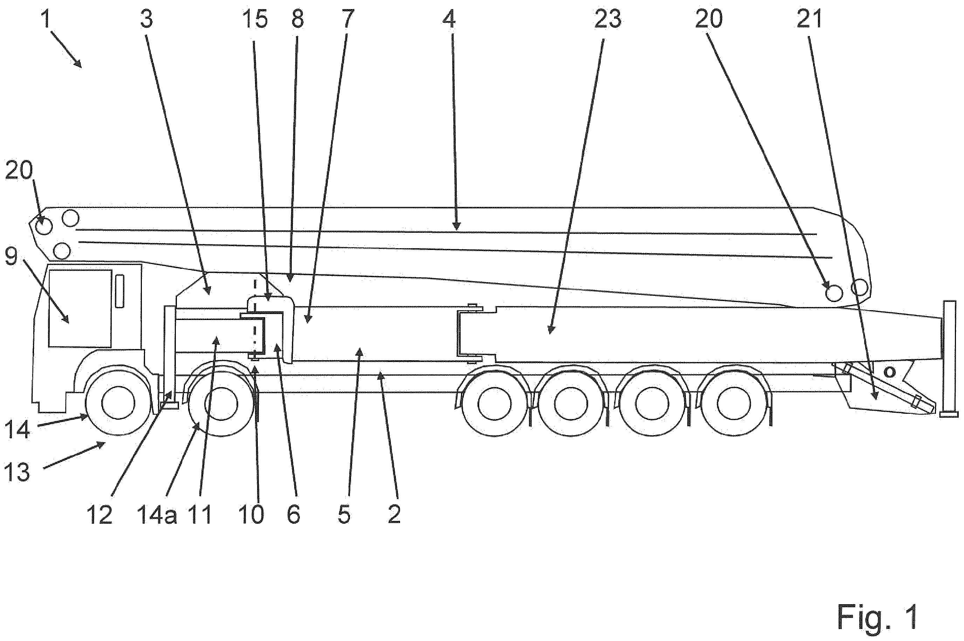

In den Figuren mit dem Bezugszeichen 1 bezeichnet ist ein erfindungsgemäßes Fahrzeug 1 rein schematisch dargestellt. Das dargestellte Fahrzeug 1 ist als Autobetonpumpe ausgebildet. Auf dem Rahmen 2 des Fahrzeuges 1 ist ein schwenkbarer Drehschemel 3 angeordnet, auf welchem ein mehrgliedriger Mast 4 aufgebaut ist. Die Segmente des Mastes 4 sind in der dargestellten Zeichnung über Gelenke 20 für den Fahrbetrieb zusammengefaltet. Nach Ausfaltung des Mastes 4 dient dieser zum Verteilen von Beton auf einer Baustelle. Der Beton wird hierzu über einen heckseitig angeordneten Aufgabetrichter 21 eingefüllt und über eine Betonpumpe in nicht dargestellte Förderleitungen am Mast 4 gefördert, um über einen an der Mastspitze des ausgefalteten Mastes 4 angeordneten Endschlauch (nicht dargestellt) verteilt werden zu können. Der ausgefaltete Mast 4 erreicht beträchtliche Höhen und löst ein von der Ausladung und der Länge des Mastes 4 abhängiges Kippmoment aus. Die Rahmenabstützung 5, welche mit dem Rahmen 2 verbunden ist, trägt das Kippmoment auf die Standfläche des Fahrzeuges 1 ab und verhindert dadurch ein Umschlagen des Fahrzeuges mit dem Mast 4 beim Ausfalten des Mastes 4 bzw. beim Verteilen des Betons. Hierzu weist die Rahmenabstützung 5 aus dem Fahrzeugprofil ausziehbare horizontale Träger 6, 6a auf. Um das Fahrzeug 1 im Fahrbetrieb ohne Einschränkungen für Sondertransporte auf öffentlichen Straßen bewegen zu können, werden die spiegelbildlich baugleichen Träger 6, 6a der Rahmenabstützung 5 in das Fahrzeugprofil eingezogen. Hierzu sind die Träger 6, 6a jeweils an einem fahrzeugfesten Ausschubabschnitt 7, 7a geführt. So bilden die Träger 6, 6a mit den Ausschubabschnitten 7, 7a jeweils ein Teleskop 8, 8a. In Figur 1 gut zu erkennen ist, dass die fahrzeugfesten Ausschubabschnitte 7, 7a in Fahrtrichtung hinter einem Fahrerhaus 9 angeordnet sind. An dem freien Ende der Träger 6, 6a ist jeweils ein über ein Gelenk 10, 10a mit den Träger 6, 6a verbundenes Klappteil 11, 11a angeordnet. An dem Klappteil 11, 11a ist ein Stützbein 12, 12a angeordnet, welches vorzugsweise einen vertikal teleskopierbaren Stützfuß 22, 22a mit Stützteller aufweist. Über den gegen den Untergrund teleskopierten Stützfuß 22, 22a kann die Rahmenabstützung 5 am Untergrund abgestützt werden. In der hier gezeigten Darstellung befindet sich der Träger 6, 6a in eingezogener Transportstellung. Das Gelenk 10, 10a ist in dieser Stellung des Trägers 6, 6a außerhalb des Ausschubabschnittes 7, 7a angeordnet, sodass das Klappteil 11, 11a in eine gezeigte Transportklappstellung seitlich in das Fahrzeugprofil geklappt ist. Dabei ist das Klappteil 11, 11a nach vorne in Richtung des Fahrerhauses 9 geklappt. Durch das Klappen des Klappteils 11, 11a in Fahrtrichtung des Fahrzeugs 1 nach vorne befindet sich das Klappteil 11, 11a in der dargestellten Transportklappstellung innerhalb des seitlichen Fahrzeugprofils für den Fahrbetrieb. Das Gelenk 10, 10a für diesen Klappmechanismus bildet eine vertikale Schwenkachse, die strichpunktiert angedeutet ist, und ist an dem freien Ende des gezeigten Trägers 6, 6a angeordnet und verbindet so das Klappteil 11, 11a mit dem Träger 6, 6a. In der gezeigten Transportklappstellung des Klappteiles 11, 11a befindet sich das Stützbein 12, 12a zwischen den Radachsen 14, 14a der Doppellenkachse 13, die sich in Fahrtrichtung zwischen dem Fahrerhaus 9 und dem Ausschubabschnitt 7, 7a befindet. Aus dieser Transportklappstellung kann das Klappteil 11, 11a seitlich verschwenkt werden, bevor der Träger 6, 6a aus der hier dargestellten Transportstellung in eine ausgezogen Abstützstellung ausziehbar ist. Der Einbauraum für die Steuerungselektronik/-hydraulik 33 wird durch das nach vorne geklappte Klappteil nicht beeinträchtigt. Je nach Maschinenausstattung/-variante könnten in diesem Bereich beispielsweise auch ein Tank, Werkzeugkasten o.ä. untergebracht sein.

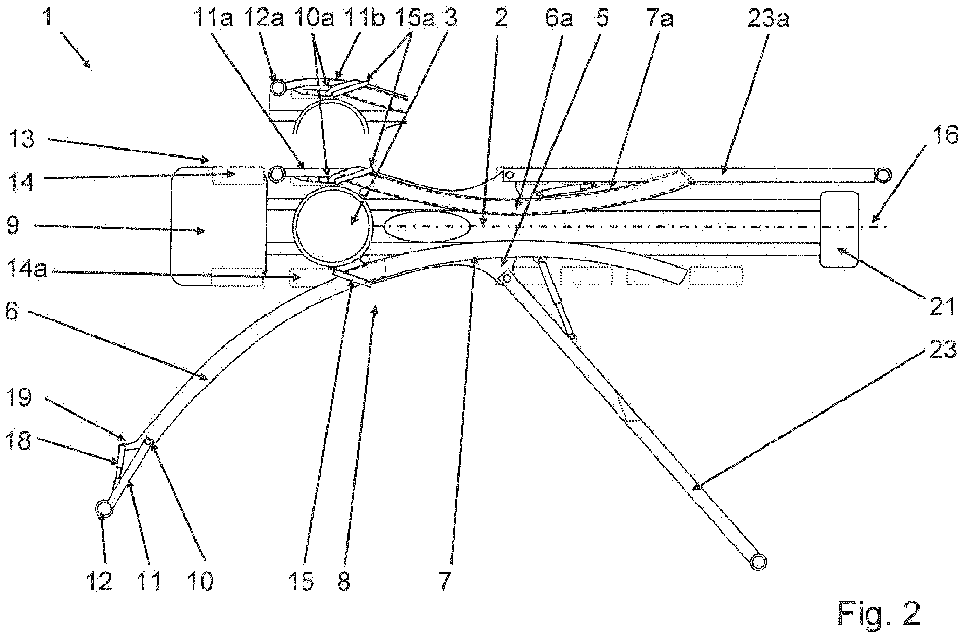

Die Figur 2 zeigt das Fahrzeug 1 gemäß Figur 1 aus der Vogelperspektive. In Fahrtrichtung auf der linken Seite ist der bogenförmige Träger 6 aus dem Ausschubabschnitt 7 ausgezogen dargestellt. Das über das Gelenk 10 mit dem Träger 6 verbundene Klappteil 11 ist in Abstützklappstellung ausgeklappt. In Fahrtrichtung auf der rechten Seite ist der bogenförmige Träger 6a in Transportstellung im Ausschubabschnitt 7a eingezogen und das über das Gelenk 10a mit dem Träger 6a verbundene Klappteil 11a ist in Transportklappstellung nach vorne in Richtung des Fahrerhauses 9 geklappt, sodass das Klappteil 10a sich seitlich im Fahrzeugprofil befindet. In Figur 2 ausschnittsweise dargestellt ist eine Ausführungsform, bei welcher das Klappteil 11b vom Gelenk 10a in Richtung Fahrzeugmitte 16 gebogen ausgebildet ist, auch eine geknickte Ausführung wäre beispielsweise möglich. Durch diese Ausgestaltung kann das Stützbein 12a in Transportklappstellung noch weiter in das Fahrzeugprofil eingeklappt werden, sodass größere Stützfüße 22, 22a verwendet werden können, ohne dass diese über das Fahrzeugprofil seitlich hinausragen. Wie zu erkennen ist, befindet sich das an dem Klappteil 11, 11a angeordnete Stützbein 12, 12a in der gezeigten Transportklappstellung zwischen den Radachsen 14, 14a der Doppellenkachse 13. Aus dieser Stellung kann das Klappteil 11a zunächst in die Abstützklappstellung verschwenkt werden, bevor der Träger 6a aus dem Ausschubabschnitt 7a ausgezogen wird. Hierdurch werden Kollisionen mit den Radachsen 14, 14a verhindert. Wie bereits oben erwähnt, ist der Träger in Fahrtrichtung links in aus dem Ausschubabschnitt 7 ausgezogener Abstützstellung dargestellt. Das Klappteil 11 ist in die Abstützklappstellung verschwenkt durch einen Antrieb 17, der im hier gezeigten Ausführungsbeispiel als Hydraulikzylinder 18 ausgebildet ist. Dieser Antrieb 18 ist dazu ausgebildet das Klappteil 11 in der gewählten Abstützklappstellung zu halten. Der Hydraulikzylinder 18 des Antriebes ist an einer Nase 19 angelenkt, die sich am freien Ende des Trägers 6 befindet. Durch Ausbildung dieser Nase 19 verfügt der Hydraulikzylinder 18 über einen ausreichenden Hebelarm, um das Klappteil 11 gegenüber dem Träger 6 um das Gelenk 10 zu verschwenken. In Figur 2 ist weiter zu erkennen, dass die beiden Ausschubabschnitte 7, 7a jeweils einen Kragen 15, 15a aufweisen. Dieser Kragen 15, 15a verläuft gegenüber dem Fahrzeugprofil in Richtung des Fahrerhauses 9 schräg zur Fahrzeugmitte 16 hin, sodass der Kragen 15, 15a auf seiner dem Fahrerhaus 9 zugewandten Seite 28 im Wesentlichen um die Breite b des Klappteiles 11, 11a vom Fahrzeugprofil in Richtung Fahrzeugmitte 16 versetzt ist. Im gezeigten Ausführungsbeispiel verläuft der Kragen 15, 15a gegenüber der Fahrzeuglängsachse in Richtung des Fahrerhauses 9 mit einem Winkel von vorzugsweise 15 Grad zur Fahrzeugmitte 16 hin. Hierdurch wird das Einklappen des Klappteils 11 in Transportklappstellung nach vorne erleichtert. In Figur 2 weiter zu sehen ist, dass in Fahrtrichtung hinter den Krägen 15, 15a rückwärtige Klappträger 23, 23a zur Abstützung des Fahrzeuges 1 angelenkt sind, wobei der Träger 23 in Fahrtrichtung auf der linken Seite in Abstützstellung ausgeklappt dargestellt ist, während der Klappträger 23a in Fahrtrichtung auf der rechten Seite in Transportstellung seitlich in das Fahrzeugprofil eingeklappt ist.

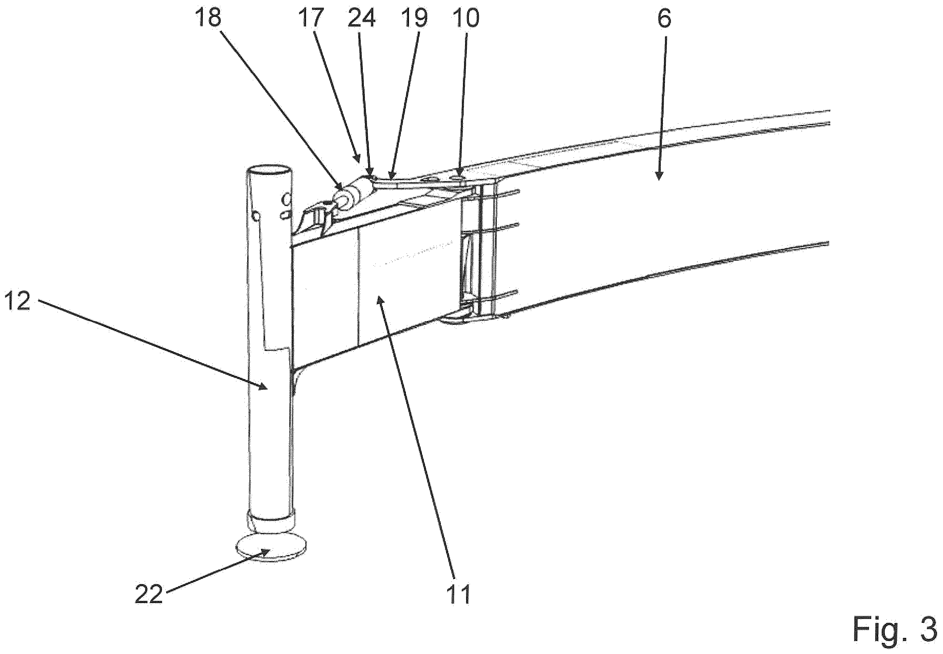

In Figur 3 ist perspektivisch eine Detailansicht des Trägers 6 und des über das Gelenk 10 verbunden Klappteils 11 gezeigt. Der hier gezeigte Träger 6 ist aus dem Ausschubabschnitt 7 ausgezogen und das Klappteil 11 befindet sich in einer Abstützklappstellung. In diese Abstützklappstellung wurde das Klappteil 11 mittels eines Antriebes 17 verschwenkt, der durch einen Hydraulikzylinder 18 gebildet ist. Dieser Hydraulikzylinder 18 ist an einer Nase 19 angelenkt, die sich am freien Ende des Trägers 6 befindet. Hierdurch verfügt der Hydraulikzylinder 18 über einen ausreichenden Hebelarm, um das Klappteil 11 gegenüber dem Träger 6 um das Gelenk 10 herum horizontal zu verschwenken. In der dargestellten Abstützklappstellung wird das Klappteil 11 von dem Hydraulikzylinder 18, z.B. durch eine hydraulische Verriegelung mit Rückschlagsperrventilen gehalten, sodass sich dessen Position gegenüber dem Träger 6 nicht verändert. Um immer die maximale seitliche Abstützweite zu erzielen, kann die Winkelstellung des Klappteils durch eine geeignete Sensorik (Winkelmessung, Endlagenschalter o.ä.) am Hydraulikzylinder 18 oder dem Gelenk 10 überprüft werden, um sicherzustellen, dass das Klappteil 11 vollständig ausgefahren ist. Mit dem Hydraulikzylinder 18 lässt sich das Klappteil 11 gegebenenfalls flexibel in verschiedene Abstützklappstellungen bringen, um die Abstützung an die Gegebenheiten auf der Baustelle anzupassen. Die Verriegelung des Klappteiles 11 gegenüber dem Träger 6 erfolgt vorzugsweise ausschließlich über den Hydraulikzylinder 18.

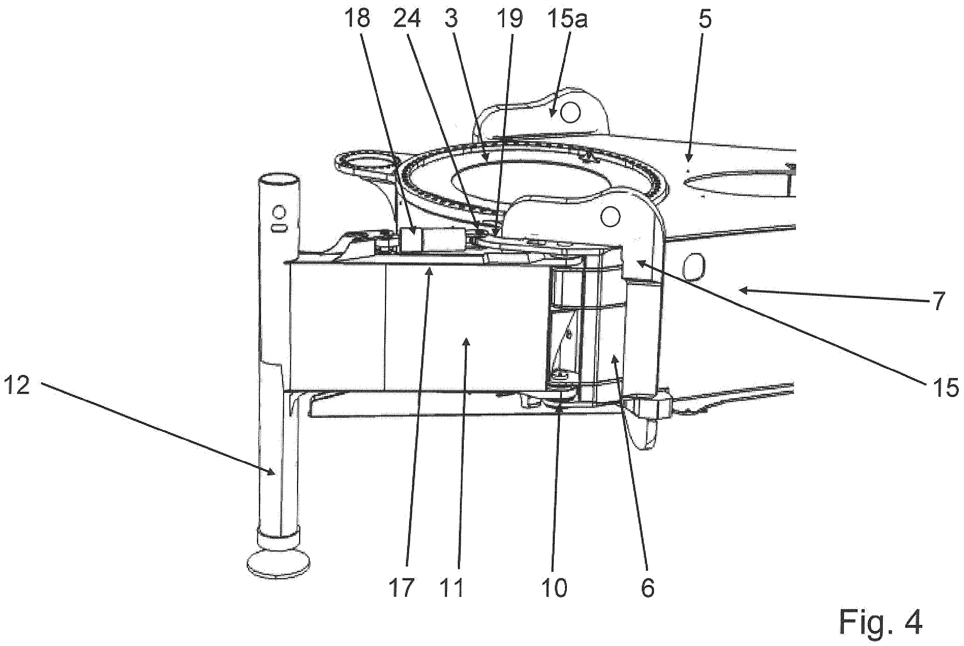

Die Figur 4 zeigt eine perspektivische Detailansicht der Rahmenabstützung 5 und des Klappteiles 11. Der hier gezeigte Träger 6 befindet sich in Transportstellung und ist in den Ausschubabschnitt 7 eingezogen. Wie zu erkennen ist, befindet sich das Gelenk 10, welches das Klappteil 11 mit dem Träger 6 verbindet, in dieser Stellung außerhalb des Ausschubabschnittes 7. Aus diesem Grund kann das Klappteil 11 in die gezeigte Transportklappstellung geklappt werden. Dies wird auch durch den Kragen 15 ermöglicht, der unter einem Winkel in Richtung des Fahrerhauses 9 zur Fahrzeugmitte 16 hin verläuft, wie oben beschrieben. Weiter ist zu erkennen, dass um den Kragen 15 des Ausschubabschnittes 7 herum die am Träger 6 ausgebildete Nase 19 in Richtung der Fahrzeugmitte 16 geführt ist. Durch diese Nase 19 kann die Drehachse 24 für den Hydraulikzylinder 18 möglichst weit in der Fahrzeugmitte 16 positioniert werden, um ausreichend Einbaulänge und Hebelarm für den Hydraulikzylinder 18 auch in der gezeigten Transportklappstellung zur Verfügung zu stellen.

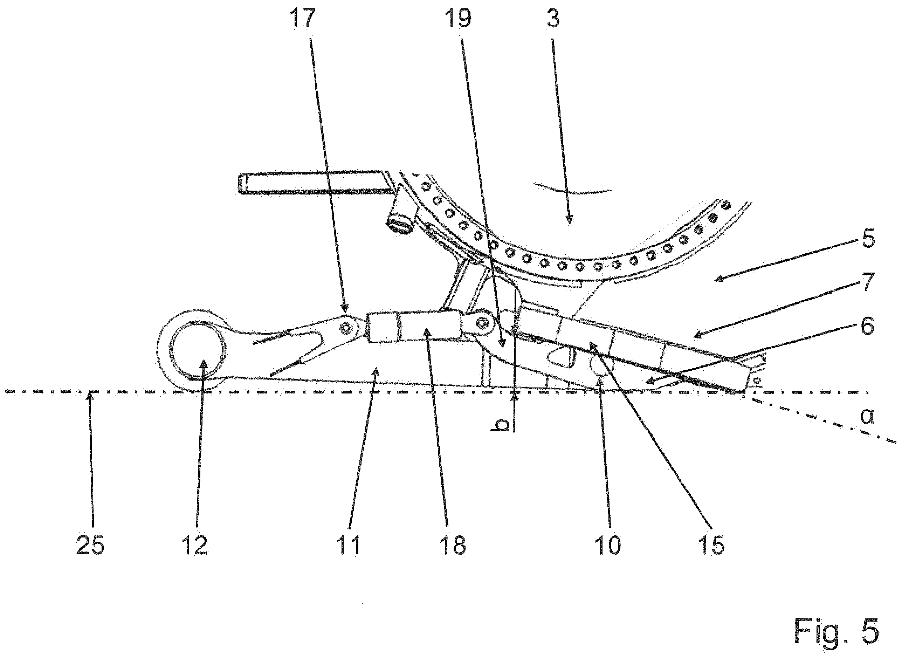

Die Figur 5 zeigt eine Vogelperspektive der Rahmenabstützung 5 und des Klappteiles 11 gemäß Figur 4. Zu erkennen ist, dass sich das Klappteil 11 in der gezeigten Transportklappstellung innerhalb des strichpunktiert angedeuteten Fahrzeugprofiles 25 befindet, welches die maximal zulässige Breite des Fahrzeuges 1 angibt. Die an dem Träger 6 angeordnete Nase 19 führt um den Kragen 15 des Ausschubabschnittes 7 herum in Richtung Fahrzeugmitte 16 und bietet so ausreichend Hebelarm und Einbaulänge für den Hydraulikzylinder 18, über den das Klappteil 11 um das Gelenk 10 herum aus der gezeigten Transportklappstellung in die Abstützklappstellung verschwenkt werden kann. Das Gelenk 10 zwischen dem Träger 6 und dem Klappteil 11 ist in der gezeigten Transportstellung des Trägers 6 in dem Ausschubabschnitt 7 so angeordnet, dass es außerhalb des Ausschubabschnittes 7 verbleibt. Dies wird auch durch den Kragen 15 gewährleistet, der gegenüber dem Fahrzeugprofil 25 in Richtung des Fahrerhauses 8 zur Fahrzeugmitte 16 hin verläuft, sodass der Kragen 15, 15a auf einer Fahrerhaus 9 nahen Seite 28 mindestens um die Breite b des Klappteiles 11, 11a vom Fahrzeugprofil 25 in Richtung Fahrzeugmitte 16 versetzt ist. Im gezeigten Ausführungsbeispiel verläuft der Kragen 15, 15a gegenüber dem Fahrzeugprofil in Richtung des Fahrerhauses 9 mit einem Winkel α von vorzugsweise 15° zur Fahrzeugmitte 16 hin. Dieser Winkel α ist durch eine weitere strichpunktiert angedeutete Linie verdeutlicht. Dieser Versatz des Kragens 15 gegenüber der Längsseite des Fahrzeugprofiles 25 gewährleistet, dass das Klappteil 11 in Transportstellung des Trägers 6 im Ausschubabschnitt 7 über das Gelenk 10 in Transportklappstellung nach vorne klappbar ist. In Figur 5 ist außerdem zu erkennen, dass der Stützfuß 22 am Klappteil 11 leicht zur Fahrzeugmitte 16 nach innen versetzt ist, damit dieser sich in Transportklappstellung des Klappteiles 11 innerhalb des Fahrzeugprofiles befindet.

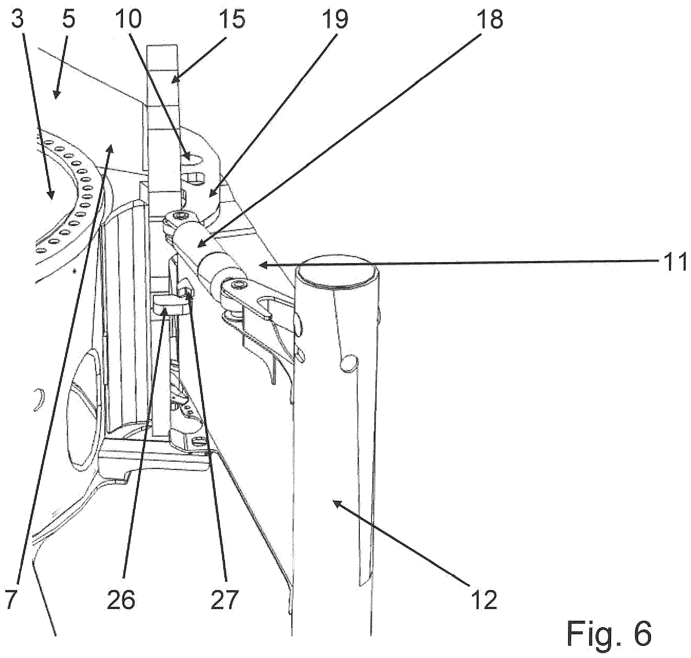

Aus Figur 6 geht eine perspektivische Detailansicht der Rahmenabstützung 5 und des Klappteils 11 hervor. In der dargestellten Ansicht ist ein Blick hinter das Klappteil 11 möglich. In dieser Darstellung gut zu erkennen ist, dass die Rahmenabstützung 5 eine Rastnase 26 aufweist, die in eine Öse 27 am Klappteil 11 eingreift und so verhindert, dass der Träger 6 aus dem Ausschubabschnitt 7 heraus geschoben wird, bevor das Klappteil 11 nicht aus der Transportklappstellung in eine Abstützklappstellung verschwenkt wurde. Das Klappteil 11 könnte auch durch einen Verriegelungsbolzen gesichert werden.

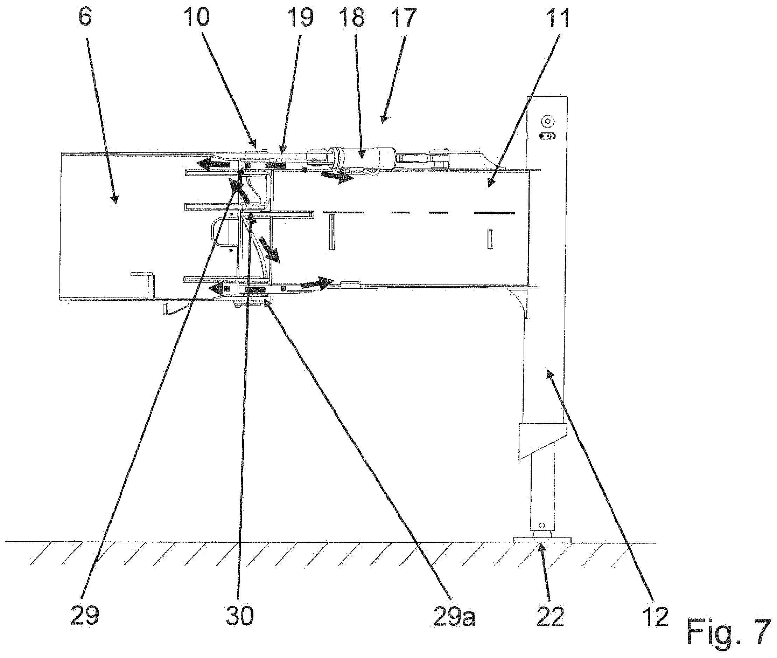

Die Figur 7 zeigt eine perspektivische Detailansicht des Gelenkes 10 zwischen Klappteil 11 und Träger 6. In der dargestellten Ansicht ist ein Blick hinter das Klappteil 11 möglich. In dieser Darstellung gut zu erkennen ist, dass das Gelenk 10 zwischen Klappteil 11 und Träger 6 mehrere Gelenksbauteile 29, 29a, 30 aufweist. Während das obere und untere Gelenksbauteil 29, 29a zur Übertragung von Horizontalkräften ausgebildet sind, ist das mittlere Gelenksbauteil 30 zur Übertragung von Vertikalkräften ausgebildet. In Figur 7 sind die zu übertragenen Kräfte als strichpunktierte Pfeile angedeutet. Zur Übertragung horizontal wirkender Kräfte weisen das obere 29a und das untere Gelenksbauteil 29 Bolzen auf. Das mittlere Gelenksbauteil 30 ist ohne Bolzen ausgebildet, da hier über Auflageflächen lediglich vertikal wirkende Kräfte übertragen werden.

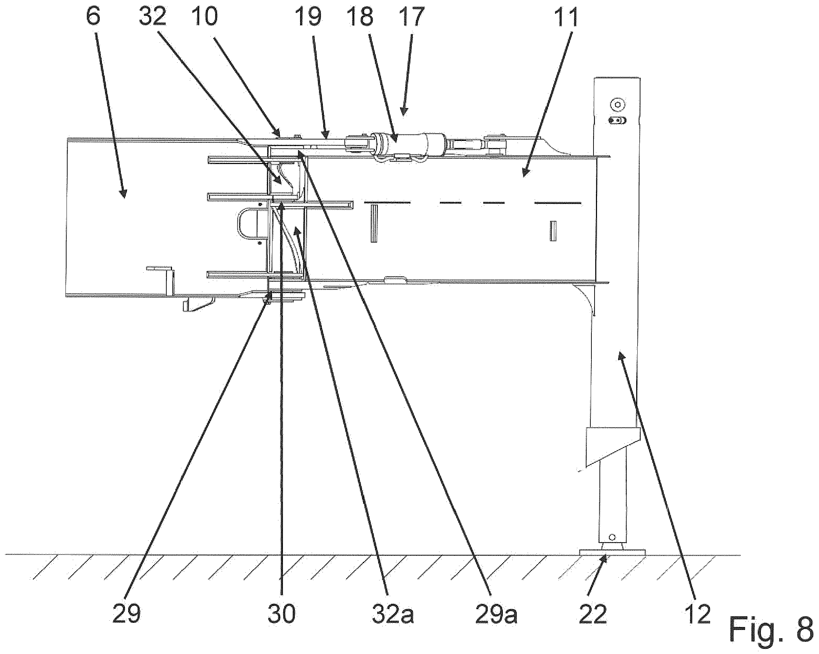

Die Figur 8 zeigt ein Gelenk 10 zwischen Klappteil 11 und Träger 6 gemäß Figur 7 jedoch ohne eingezeichnete Kraftlinien. Es ist zu erkennen, dass das mittlere Gelenksbauteil 30 zur Abstützung der Vertikalkräfte spitz zulaufende Abstützungsträger 32, 32a umfasst.

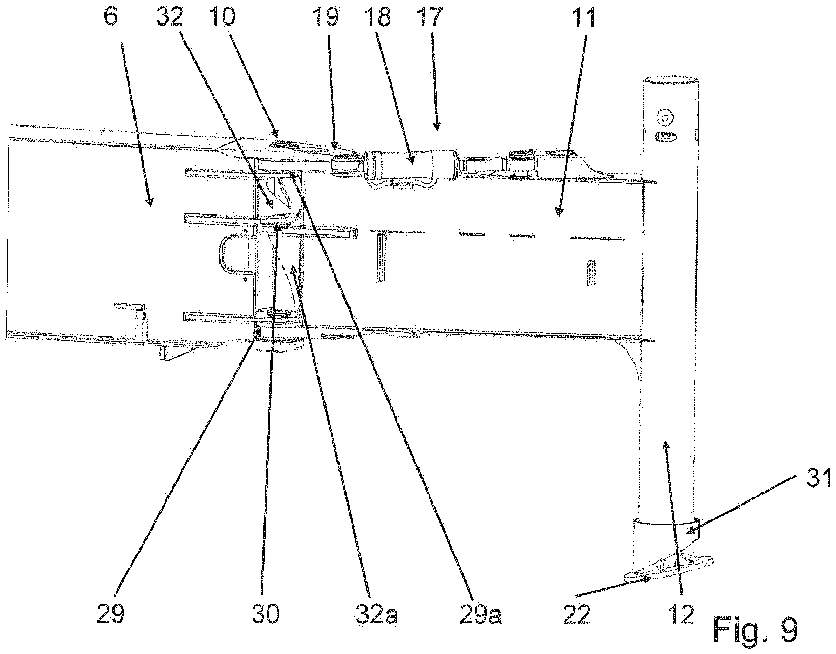

Aus Figur 9 geht ein Gelenk 10 zwischen Klappteil 11 und Träger 6 gemäß der Figuren 7 und 8 hervor, allerdings ist hier eine perspektivische Darstellung gewählt. Außerdem ist der Stützfuß 22 des Stützbeines 12 eingezogen und durch eine schräg zulaufende Manschette 31 abgeklappt positioniert.

Abschließend sei noch darauf hingewiesen, dass die Zeichnungen zwar eine Rahmenabstützung 5 mit bogenförmigen Ausschubabschnitten 7, 7a und entsprechenden Trägern 6, 6a zeigen. Der Grundgedanke der Erfindungen ist aber grundsätzlich beispielsweise auch auf sogenannte teleskopierbare X-Abstützungen mit geraden oder auch gebogenen Ausschubabschnitten, die sich vor oder hinter dem Drehschemel kreuzen oder auch auf Teleskopabstützungen, bei denen die Träger senkrecht zur Fahrzeugseite ausgefahren werden, anwendbar.

Natürlich ist die Erfindung nicht auf die dargestellten Ausführungsbeispiele beschränkt. Weitere Ausgestaltungen sind möglich, ohne den durch die Ansprüche definierten Schutzumfang zu verlassen.

So kann das Fahrzeug auch als sogenannte Truck und Trailer-Autobetonpumpe ausgebildet sein. Hier ist das Fahrerhaus Teil eines Zugfahrzeugs, wobei die Rahmenabstützung Teil eines gelenkig mit der Zugmaschine verbundenen Aufliegers ist.

### Bezuaszeichenliste

1 Fahrzeug
2 Rahmen
3 Drehschemel
4 Mast
5 Rahmenabstützung
6 6a Träger
7 7a Ausschubabschnitte
8 8a Teleskope
9 Fahrerhaus
10 10a Gelenke
11 11a Klappteile
12 12a Stützbeine
13 Doppellenkachse
14 14a Radachsen
15 15a Kragen
16 Fahrzeugmitte
17 17a Antriebe
18 18a Hydraulikzylinder
19 19a Nasen
20 Mastgelenke
21 Aufgabetrichter
22 22a Stützfuß
23 23a Klappträger
24 Drehachse (Hydraulikzylinder)
25 Fahrzeugprofil
26 Rastnase
27 Öse
28 Fahrerhaus nahe Seite (Kragen)
29 29a Gelenkbauteile für Horizontalkräfte
30 Gelenkbauteil für Vertikalkräfte
31 Manschette
32 32a Abstützungsträger
33 Steuerungshydraulik /-elektronik

## Patentansprüche

1. Fahrzeug (1), insbesondere Autobetonpumpe, mit einem auf einem Rahmen (2) angeordneten, schwenkbaren Drehschemel (3) mit darauf aufgebautem Mast (4), und einer Rahmenabstützung (5), die in das Fahrzeugprofil einziehbare und/ oder aus dem Fahrzeugprofil ausziehbare Träger (6, 6a) aufweist, wobei die Träger (6, 6a) jeweils an einem fahrzeugfesten Ausschubabschnitt (7, 7a) geführt sind und mit diesem ein Teleskop (8, 8a) bilden, wobei die fahrzeugfesten Ausschubabschnitte (7, 7a) in Fahrtrichtung hinter einem Fahrerhaus (9) angeordnet sind, wobei an einem freien Ende der Träger (6, 6a) jeweils ein über ein Gelenk (10, 10a) verbundenes Klappteil (11, 11a) angeordnet ist, wobei an dem Klappteil (11, 11a) jeweils ein Stützbein (12, 12a) angeordnet ist, wobei das Gelenk (10, 10a) in eingezogener Transportstellung der Träger (6, 6a) außerhalb des jeweiligen Ausschubabschnittes (7, 7a) angeordnet ist, sodass das Klappteil (11, 11a) in einer Transportklappstellung seitlich in das Fahrzeugprofil klappbar ist,
wobei das Klappteil (11, 11a) in Transportklappstellung nach vorne in Richtung Fahrerhaus (9) klappbar ist, **dadurch gekennzeichnet, dass** die Ausschubabschnitte (7, 7a) jeweils einen Kragen (15, 15a) aufweisen, wobei dieser Kragen (15, 15a) gegenüber dem Fahrzeugprofil in Richtung des Fahrerhauses (9) zur Fahrzeugmitte (16) hin verläuft, sodass der Kragen (15, 15a) auf einer dem Fahrerhaus (9) zugewandten Seite (28) mindestens um die Breite des Klappteiles (11, 11a) in Richtung Fahrzeugmitte (16) versetzt ist.

2. Fahrzeug (1) nach Anspruch 1, **dadurch gekennzeichnet, dass** das Fahrzeug (1) zwischen Fahrerhaus (9) und Ausschubabschnitt (7, 7a) zwei oder mehr Radachsen (14, 14a) aufweist, wobei die an dem jeweiligen Klappteil (11, 11a) angeordneten Stützbeine (12, 12a) in Transportklappstellung zwischen zwei Radachsen (14, 14a) angeordnet sind.

3. Fahrzeug (1) nach Anspruch 1 oder 2, **dadurch gekennzeichnet, dass** das Klappteil (11, 11a) aus der Transportklappstellung in eine Abstützklappstellung verschwenkbar ist, bevor der bogenförmige Träger (6, 6a) aus der eingezogenen Transportstellung in eine ausgezogene Abstützstellung ausziehbar ist.

4. Fahrzeug (1) nach Anspruch 3, **dadurch gekennzeichnet, dass** das Klappteil (11, 11a) in der Transportklappstellung und / oder in einer Abstützklappstellung verrastbar ist.

5. Fahrzeug (1) nach einem der Ansprüche 1 bis 4, **dadurch gekennzeichnet, dass** das Klappteil (11, 11a) gegenüber dem Träger (6, 6a) jeweils mittels eines Antriebes (17, 17a) von der Transportklappstellung in die Abstützklappstellung verschwenkbar ist.

6. Fahrzeug (1) nach Anspruch 5, **dadurch gekennzeichnet, dass** der Antrieb (17, 17a) dazu ausgebildet ist, das Klappteil (11, 11a) in der Transportklappstellung und / oder in der Abstützklappstellung zu halten.

7. Fahrzeug (1) nach Anspruch 5 oder 6, **dadurch gekennzeichnet, dass** der Antrieb (17, 17a) einen Hydraulikzylinder (18, 18a) umfasst, wobei an dem freien Ende des Trägers (6, 6a) eine Nase (19, 19a) zur Anlenkung des Hydraulikzylinders (18, 18a) ausgebildet ist.

8. Fahrzeug (1) nach Anspruch 1 und 7, **dadurch gekennzeichnet, dass** die Nase (19, 19a) in Transportstellung des Trägers (6, 6a) um den jeweiligen Kragen (15, 15a) des Ausschubabschnittes (7, 7a) herum in Richtung der Fahrzeugmitte (16) führt.

9. Fahrzeug (1) nach einem der Ansprüche 1 bis 8, **dadurch gekennzeichnet, dass** das Klappteil (11, 11a) teleskopierbar aufgebaut ist.

## Claims

1. A vehicle (1), particularly a truck-mounted concrete pump, having a pivotable turntable (3), arranged on a frame (2), with a boom (4) constructed thereon, and a frame outrigger (5) which comprises carriers (6, 6a) that are retractable into the vehicle profile and/or extendable out of the vehicle profile, wherein the carriers (6, 6a) are each guided on an extension portion (7, 7a) fixed to the vehicle and form a telescope (8, 8a) therewith, wherein the extension portions (7, 7a) fixed to the vehicle are arranged behind a cab (9) in the direction of travel, wherein a folding part (11, 11a) connected via a joint (10, 10a) is arranged at a free end of each carrier (6, 6a), wherein a support leg (12, 12a) is arranged on each folding part (11, 11a), wherein the joint (10, 10a) is arranged outside the respective extension portion (7, 7a) in the retracted transport position of the carriers (6, 6a) such that the folding part (11, 11a) is foldable laterally into the vehicle profile in a transport folded position, wherein the folding part (11, 11a) is foldable forwards towards the cab (9) in the transport folded position,
**characterised in that**
the extension portions (7, 7a) each comprise a collar (15, 15a), wherein in relation to the vehicle profile this collar (15, 15a) extends in the direction of the cab (9) towards the vehicle middle (16) such that, on a side (28) facing the cab (9), the collar (15, 15a) is offset in the direction of the vehicle middle (16) at least by the width of the folding part (11, 11a).

2. The vehicle (1) according to claim 1, **characterised in that** the vehicle (1) has two or more wheel axles (14, 14a) positioned between the cab (9) and the extension portion (7, 7a), wherein the support legs (12, 12a) arranged on the respective folding parts (11, 11a) are arranged between two wheel axles (14, 14a) in the transport folded position.

3. The vehicle (1) according to claim 1 or 2, **characterised in that** the folding part (11, 11a) is pivotable out of the transport folded position into a supporting folded position before the arcuate carrier (6, 6a) is extendable from the retracted transport position into an extended supporting position.

4. The vehicle (1) according to claim 3, **characterised in that** the folding part (11, 11a) is latchable in the transport folded position and/or in a supporting folded position.

5. The vehicle (1) according to any one of claims 1 to 4, **characterised in that** each folding part (11, 11a) is pivotable in relation to the support (6, 6a) from the transport folded position into the supporting folded position by means of a drive (17, 17a).

6. The vehicle (1) according to claim 5, **characterised in that** the drive (17, 17a) is configured to hold the folding part (11, 11a) in the transport folded position and/or in the supporting folded position.

7. The vehicle (1) according to claim 5 or 6, **characterised in that** the drive (17, 17a) comprises a hydraulic cylinder (18, 18a), wherein a lug (19, 19a) for attaching the hydraulic cylinder (18, 18a) in an articulated manner is formed at the free end of the carrier (6, 6a).

8. The vehicle (1) according to claims 1 and 7, **characterised in that** in the transport position of the carrier (6, 6a), the lug (19, 19a) passes around the respective collar (15, 15a) of the extension portion (7, 7a) in the direction of the vehicle middle (16).

9. The vehicle (1) according to any one of claims 1 to 8, **characterised in that** the folding part (11, 11a) is telescopic.

## Revendications

1. Véhicule (1), en particulier pompe à béton automotrice, comportant une couronne d'orientation (3) pivotante agencée sur un châssis (2), dotée d'un mât (4) monté sur celle-ci, et un système de support de châssis (5) qui présente des supports (6, 6a) qui peuvent être rentrés dans le profil de véhicule et/ou sortis du profil de véhicule, les supports (6, 6a) étant chacun guidés sur une partie de déploiement (7, 7a) solidaire du véhicule et formant avec celle-ci un dispositif télescopique (8, 8a), les parties de déploiement (7, 7a) solidaires du véhicule étant agencées, dans le sens de la marche, derrière une cabine de conducteur (9), une partie rabattable (11, 11a) reliée par le biais d'une articulation (10, 10a) étant respectivement agencée sur une extrémité libre des supports (6, 6a), une béquille (12, 12a) étant agencée sur chaque partie rabattable (11, 11a), l'articulation (10, 10a) étant, dans la position de transport rentrée des supports (6, 6a), agencée en dehors de la partie de déploiement (7, 7a) respective de telle sorte que la partie rabattable (11, 11a) peut être rabattue latéralement dans le profil de véhicule dans une position rabattue de transport, la partie rabattable (11, 11a) pouvant être rabattue vers l'avant en direction de la cabine de conducteur (9) dans la position rabattue de transport,
**caractérisé en ce que**
les parties de déploiement (7, 7a) présentent chacune un rebord (15, 15a), ce rebord (15, 15a) s'étendant, par rapport au profil de véhicule, vers le centre du véhicule (16) en direction de la cabine de conducteur (9) de telle sorte que le rebord (15, 15a) présente, sur un côté (28) orienté vers la cabine de conducteur (9), un décalage en direction du centre du véhicule (16) au moins égal à la largeur de la partie rabattable (11, 11a).

2. Véhicule (1) selon la revendication 1, **caractérisé en ce que** le véhicule (1) présente, entre la cabine de conducteur (9) et la partie de déploiement (7, 7a), deux essieux (14, 14a) ou plus, les béquilles (12, 12a) agencées sur la partie rabattable (11, 11a) respective étant agencées entre deux essieux (14, 14a) dans la position rabattue de transport.

3. Véhicule (1) selon la revendication 1 ou 2, **caractérisé en ce que** la partie rabattable (11, 11a) peut être pivotée d'une position rabattue de transport à une position dépliée de support avant que le support (6, 6a) en forme d'arc puisse être sorti pour passer de la position de transport rentrée à une position de support sortie.

4. Véhicule (1) selon la revendication 3, **caractérisé en ce que** la partie rabattable (11, 11a) peut être enclenchée dans la position rabattue de transport et/ou dans une position dépliée de support.

5. Véhicule (1) selon l'une des revendications 1 à 4, **caractérisé en ce que** la partie rabattable (11, 11a) peut être pivotée par rapport au support (6, 6a), respectivement au moyen d'un entraînement (17, 17a), de la position rabattue de transport à la position dépliée de support.

6. Véhicule (1) selon la revendication 5, **caractérisé en ce que** l'entraînement (17, 17a) est conçu pour retenir la partie rabattable (11, 11a) dans la position rabattue de transport et/ou dans la position dépliée de support.

7. Véhicule (1) selon la revendication 5 ou 6, **caractérisé en ce que** l'entraînement (17, 17a) comprend un vérin hydraulique (18, 18a), un nez (19, 19a) permettant l'articulation du vérin hydraulique (18, 18a) étant réalisé sur l'extrémité libre du support (6, 6a).

8. Véhicule (1) selon les revendications 1 et 7, **caractérisé en ce que** le nez (19, 19a) passe, dans la position de transport du support (6, 6a), autour du rebord (15, 15a) respectif de la partie de déploiement (7, 7a), en direction du centre du véhicule (16).

9. Véhicule (1) selon l'une des revendications 1 à 8, **caractérisé en ce que** la partie rabattable (11, 11a) est conçue de manière télescopique.
